Europäisches Patentamt

European Patent Office

Office européen des brevets

(19)

(11) Numéro de publication: **0 072 768**
**B1**

(12) ## FASCICULE DE BREVET EUROPEEN

(45) Date de publication du fascicule du brevet:
04.06.86

(51) Int. Cl.⁴: **B 60 C 23/04,** B 60 C 29/00

(21) Numéro de dépôt: **82430020.6**

(22) Date de dépôt: **13.08.82**

(54) **Roue manométrique pour véhicule automobile.**

(30) Priorité: **14.08.81 FR 8115846**

(43) Date de publication de la demande:
**23.02.83 Bulletin 83/8**

(45) Mention de la délivrance du brevet:
**04.06.86 Bulletin 86/23**

(84) Etats contractants désignés:
**BE CH DE FR GB IT LI**

(56) Documents cités:
**FR - A - 655 815**
**FR - A - 790 516**
**FR - A - 1 030 246**
**GB - A - 330 898**
**GB - A - 636 470**
**US - A - 2 119 287**
**US - A - 2 575 849**
**US - A - 3 260 233**
**US - A - 3 303 696**

(73) Titulaire: **Daniault, Alain, 5 place Lumière,**
**F-13008 Marseille (FR)**

(72) Inventeur: **Daniault, Alain, 5 place Lumière,**
**F-13008 Marseille (FR)**

(74) Mandataire: **Azais, Henri et al, c/o CABINET BEAU DE**
**LOMENIE 14, rue Raphael, F-13008 Marseille (FR)**

ACTORUM AG

# Description

La présente invention a pour objet des roues manométriques pour véhicules automobiles.

Etant donné une roue d'un véhicule automobile, on sait que le pneumatique l'équipant se dégonfle lentement dans le temps par diffusion gazeuse de l'air comprimé au travers de la chambre ou du pneu élastomère connu n'étant totalement étanche à un gaz.

Le but de la présente invention est de permettre une vérification permanente, précise et sans aucune manipulation de la pression régnant dans chacun des pneumatiques du véhicule afin de permettre aux conducteurs de réaliser à la fois des économies d'énergie et d'accroître leur sécurité.

En effet, concernant les économies d'énergies, des études ont montré qu'une baisse de pression de 0,3 bar, par rapport à la pression préconisée par le fabricant du véhicule se traduisait par une augmentation de la consommation d'essence d'environ 3%.

Quant à la sécurité, le fait de rouler en sous-gonflage influe, d'une manière néfaste, sur la tenue de route du véhicule et sur le freinage. Par ailleurs, le sous-gonflage est à l'origine d'accidents graves, voire mortels, dus au déchappage des pneus, phénomène suivi de leur éclatement.

Or, malgré des campagnes de presse incessantes, des sondages prouvent que de très nombreux automobilistes ne respectent point des pressions de gonflage correctes. Ce comportement anormal semble dû tout d'abord au fait que ce paramètre, pourtant vital, qu'est la pression des pneumatiques, n'est pas aisément perceptible à l'utilisateur.

L'appréciation d'une baisse de pression de 0,3 bar par exemple est impossible sans l'aide d'un manomètre et les stations d'essence, pourtant équipées pour rendre ce service, ne s'y prêtent guère pour une raison simple: l'air est gratuit.

Quant à l'automobiliste consciencieux, il devra d'abord penser à effectuer cette vérification à froid puis se baisser au niveau de chaque valve, en dévissant le bouchon de valve correspondant pour y brancher un manomètre de contrôle, revisser le bouchon de valve, se relever et recommencer encore trois fois ce manège pour une vérification parfois inutile.

Cette succession de contraintes, pourtant minimes, devient alors suffisamment dissuasive et l'automobiliste renonce.

Changer le comportement des automobilistes en ce domaine revient donc à faciliter l'opération «vérification de la pression de chaque pneumatique», en la rendant si possible aussi aisée que celle consistant par exemple à vérifier le niveau d'essence dans le réservoir de sa voiture.

Il a été conçu, notamment sur les véhicules poids-lourds, des dispositifs manométriques permettant l'allumage d'un voyant électrique au tableau de bord lorsque la pression venait à chuter dans une roue en dessous d'un minimum. Mais la transmission de ce signal impliquait des contacts électriques tournant entre la roue mobile et le châssis, à l'origine de nombreuses alarmes intempestives et le système n'est plus utilisé.

D'autre part, ces dispositifs de contrôle, situés au voisinage de la valve, étaient à l'origine de balourds importants, qui, acceptables sur un poids-lourd, ne l'auraient pas été sur des véhicules légers, à cause des masses non suspendues plus faibles dans ce cas et de leur vitesse plus élevée.

On connaît également des capteurs manométriques, couplés à de minuscules émetteurs radio fixés sur chaque valve, et transmettant par ondes électromagnétiques vers un récepteur implanté sur le châssis du véhicule, l'état des pressions dans chaque pneumatique.

On connaît aussi des dispositifs qui, par la fermeture ou l'ouverture d'un capteur manométrique faisant partie d'un circuit magnétique fixé à la valve, devaient transmettre au tableau de bord ces indications à chaque tour de roue, et ce, grâce à un autre circuit magnétique fixé au châssis. Mais les dispositifs ci-dessus, onéreux et peu fiables, n'ont jamais été en fait commercialisés, la transmission au tableau de bord de l'état des pressions des pneumatiques posant toujours de gros problèmes à l'interface roue-châssis pour un résultat en utilisation vraiment contestable.

En effet, il importe peu à l'automobiliste de savoir, grâce à un voyant ou un cadran disposé sur le tableau de bord, que l'un de ses pneus vient de subir une chute brutale de pression, voire un éclatement car, dans cette circonstance, il sera plus préoccupé à maintenir sa voiture sur la route que d'observer un cadran.

S'il s'agit par contre de constater une baisse de pression sur plusieurs mois d'utilisation du véhicule, l'observation périodique d'un dispositif manométrique, fixé à la roue, suffit à l'utilisateur.

On connaît enfin toute une série de dispositifs manométriques, directement fixés aux valves, utilisant la plus ou moins grande déformation d'une membrane en élastomère pour visualiser les variations de pression affectant le pneu dans le temps.

Ils sont tous frappés d'un inconvénient majeur puisque l'air comprimé diffuse au travers des membranes d'autant plus facilement que ces dernières sont plus distendues, occasionnant ainsi des chutes de pression bien supérieures à celles provoquées par la diffusion gazeuse de l'air comprimé au travers des chambres à air ou des pneumatiques, le remède se relévant alors pire que le mal.

De plus, ces dispositifs dépassent du gabarit jante-pneu et sont, de ce fait, sujets à recevoir des chocs contre les bordures de trottoirs lors de la rotation des roues.

Le peu de volume disponible autour des valves conduit enfin à des conceptions de faibles dimensions, impliquant des organes de visualisation difficiles à lire et, partant, une précision très médiocre dans l'appréciation des pressions.

Le brevet GB-A-330 898 (FOULDS) décrit des roues de véhicule équipées d'un pneumatique gonflable qui comportent un contacteur pneumatique qui est logé au centre de la roue et qui est connecté pneumatiquement à la valve du véhicule. Ce contacteur comporte une partie rotative solidaire du moyeu de la roue qui comporte un tube de Bourdon et un contact électrique qui est fermé en cas de manque de pression.

Le contacteur comporte une partie fixe qui est suspendue au châssis du véhicule et qui transmet un signal électrique au tableau de bord.

Un objectif de la présente invention est de procurer des roues de véhicules équipées de pneumatiques gonflables qui comportent des moyens simples, robustes et fiables, facilement adaptables à tous les pneumatiques, quelle que soit la pression de gonflage de ceux-ci, qui, une fois réglés pour un pneumatique déterminé, permettent au conducteur de voir immédiatement, sans avoir à effectuer aucune opération, comment se situe la pression de gonflage par rapport à la pression normale, sans avoir à se rappeler celle-ci et quelle que soit la position dans laquelle la roue a pu s'immobiliser.

Cet objectif n'est pas atteint par le dispositif décrit dans le brevet GB-A-330 898 qui prévient le conducteur seulement lorsque la pression dans le pneumatique a atteint une valeur minima. De plus, le dispositif décrit dans ce brevet antérieur est un dispositif complexe et fragile et donc peu fiable.

Les roues de véhicule selon l'invention sont équipées, comme celles qui sont décrites dans ce document antérieur, d'un pneumatique gonflable, muni d'une valve et elles comportent un manomètre qui est disposé au centre de la roue, coaxialement à celle-ci et qui est relié à la valve du pneumatique par une canalisation de petit diamètre.

L'objectif de l'invention est atteint grâce à des roues qui sont équipées d'un manomètre qui comporte, à sa périphérie, plusieurs secteurs colorés juxtaposés dont l'un correspond à la plage de pression normale de gonflage dudit pneumatique.

Avantageusement, ledit manomètre comporte un boîtier qui est muni, sur sa face avant, d'un disque transparent qui porte à sa périphérie lesdits secteurs colorés juxtaposés et la position angulaire dudit disque et desdits secteurs colorés est réglable.

Un autre objectif de la présente invention est de procurer des enjoliveurs de roue permettant d'installer instantanément un dispositif selon l'invention sur divers types de roues de véhicule munies d'un pneumatique gonflable.

Cet objectif est atteint au moyen d'un enjoliveur de roue du type connu recouvrant la totalité du voile de roue et se fixant sur la jante de la roue, lequel enjoliveur comporte un manomètre incorporé au centre dudit enjoliveur et une canalisation de liaison qui part dudit manomètre, qui est fixée à la face arrière dudit enjoliveur et qui comporte, à son extrémité libre, un capuchon fileté qui se visse sur la valve du pneumatique.

L'invention a pour résultat de nouvelles roues de véhicules, équipées chacune d'un manomètre autorisant une lecture facile sans que l'observateur soit obligé de se baisser, et permettant la comparaison immédiate de la pression régnant dans chaque enveloppe par rapport à la pression d'utilisation préconisée par le constructeur des pneumatiques, donnant la possibilité à l'utilisateur d'apprécier quantitativement si la sous-pression ou la surpression régnant dans le pneu est acceptable ou non.

La position du manomètre au centre de la roue présente de nombreux avantages.

Les dispositifs précédemment évoqués prétendaient tous fixer à même la valve au moins le capteur de pression, certains autres y ajoutant aussi le système de visualisation. D'où l'obtention de dispositifs volumineux et lourds, soit de systèmes de dimensions plus réduites, mais d'une lecture difficile et peu précise.

Un appareil volumineux, dépassant immanquablement du gabarit jante-pneu, se voyait pénalisé dans sa longévité car il était susceptible de heurter violemment les bordures des trottoirs lors du déplacement du véhicule.

Un appareil lourd interdisait un bon équilibrage statique et dynamique de la roue. La position du manomètre au centre de la roue permet par contre de conserver un appareil volumineux tout en étant à l'abri des bordures de trottoirs puisque le moyeu des roues est toujours au-dessus de ces arêtes.

Les avantages attachés à un manomètre volumineux prennent alors toute leur importance, à savoir:

– lecture des pressions possible à distance sans contraindre l'utilisateur à se baisser;

– précision de la lecture;

– rappel à l'endroit de l'utilisateur d'avoir à vérifier souvent les pressions, ces manomètres, d'un diamètre de 50 à 60 mm étant particulièrement visibles;

– possibilité d'adopter un manomètre à membrane métallique, de préférence du type Bourdon.

Cette position permet aussi d'adopter des manomètres lourds sans pour autant être obligé de rééquilibrer les roues, la disparition de la contrainte poids induisant les avantages suivants;

–possibilité d'utiliser un manomètre à boîtier métallique, condition première pour l'obtention d'un appareil robuste;

– possibilité d'utiliser un capteur à membrane métallique, indispensable pour l'obtention d'une étanchéité absolue dans le temps du système.

La position centrale des manomètres débouche enfin sur un avantage important, à savoir la réduction des forces d'inerties centrifuges agissant sur le mécanisme puisque le rayon de giration est faible.

La présence d'un manomètre de diamètre important dans chaque roue permet de contrôler ainsi très fréquemment, et sans aucune intervention, la pression de gonflage et de maintenir celle-ci à une valeur au moins égale à celle préconisée par les constructeurs des voitures d'où une augmentation indéniable de la sécurité et une économie d'énergie permettant d'amortir rapidement le coût du manomètre.

Les manomètres à tubes ou capsules manométriques métalliques sont des appareils robustes, fabriqués en grande série pour l'industrie, avec un coût relativement bas, en sorte que le supplément de prix d'une roue selon l'invention est relativement réduit tout en conservant une bonne fiabilité.

Grâce aux plages colorées du disque mobile transparent, les manomètres selon l'invention sont facilement adaptables à tous les pneumatiques quelle que soit la pression de gonflage de ceux-ci. De plus, une fois réglés, ils permettent de voir comment se situe la pression de gonflage par rapport à la pression préconisée, sans avoir à connaître ou à se rappeler celle-ci.

Enfin, la possibilité d'afficher sur chaque manomètre la pression d'utilisation permet aussi une comparaison précise entre les pressions des roues d'un même essieu, toute différence entre ces valeurs étant susceptible d'affecter la tenue de cap du véhicule.

La description suivante se réfère aux dessins annexés qui représentent, sans aucun caractère limitatif, des exemples de réalisation de roues équipées de manomètres.

La figure 1 est une vue de face d'une roue selon l'invention.

La figure 2 est une vue de face d'un mode de réalisation préférentiel d'un manomètre de roue selon la figure 1.

La figure 3 est une coupe axiale du manomètre selon la figure 2.

La figure 4 est une élévation en coupe d'une roue équipée d'un enjoliveur recouvrant tout le voile de roue et au centre duquel est fixé le manomètre.

La figure 5 est une coupe axiale d'un mode de réalisation de la connexion sur la valve de l'extrémité de la canalisation de prise de pression.

La figure 6 est une élévation en coupe d'une roue sans enjoliveur avec fixation en son centre d'un manomètre.

Les figures 7 et 8 sont des coupes axiales d'un dispositif démontable de connexion sur la valve.

La figure 9 est une élévation en coupe d'une roue équipée d'un enjoliveur de moyeu au centre duquel est implanté un manomètre.

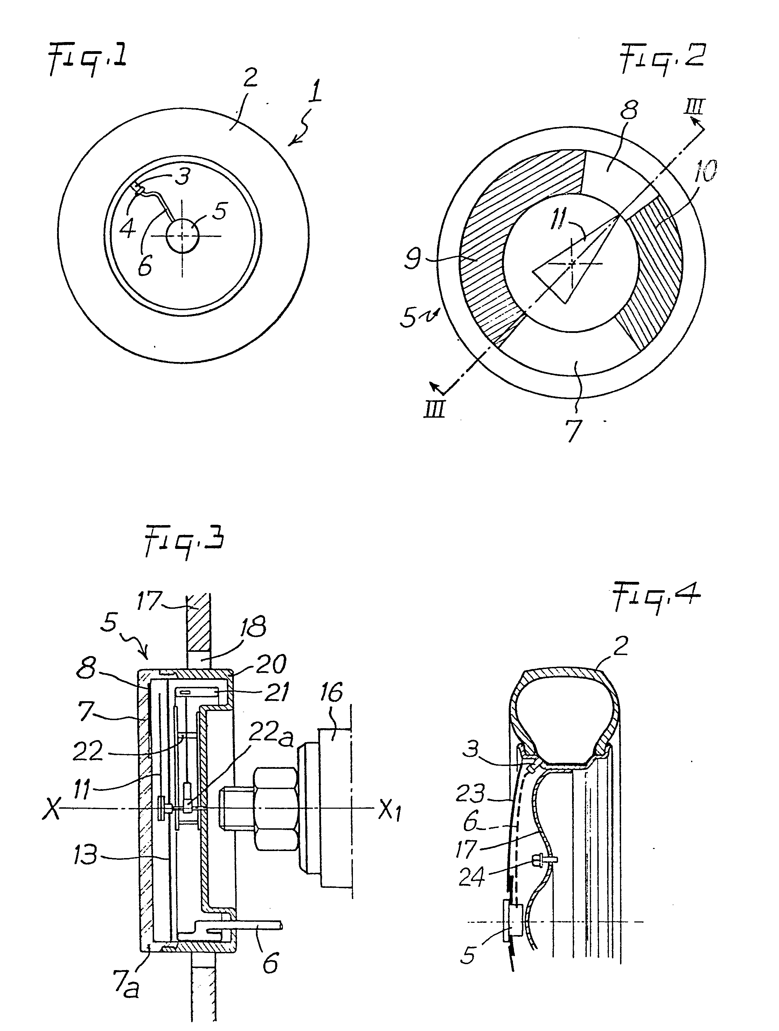

La figure 1 représente une roue 1 d'un véhicule automobile équipée d'un pneumatique Tubeless 2 ou enveloppant une chambre à air gonflable munie d'une valve 3, équipée d'un capuchon 4. La roue 1 comporte un manomètre 5 incorporé à la roue coaxialement à celle-ci. Le manomètre 5 est connecté par une petite canalisation 6 à la valve 3.

Le manomètre et la canalisation sont solidaires de la roue et tournent avec elle et le dispositif est simple à construire puisqu'il ne comporte aucun joint tournant entre une partie fixe et une partie en rotation.

La disposition du manomètre au centre de la roue, coaxialement à celle-ci, permet de loger un manomètre ayant un grand diamètre, de l'ordre de 50 à 60 mm de diamètre, facile à lire même à distance et sans déséquilibrer dynamiquement et statiquement la roue.

Le manomètre 1 peut être un manomètre à aiguille mobile devant une graduation ou un manomètre numérique indiquant la mesure numérique de la pression.

Le but poursuivi par la présente invention est de rendre particulièrement pratique l'appréciation de l'état des pressions effectives s'exerçant dans les roues du véhicule (dénommées par la suite pressions réelles) et les pressions préconisées par les constructeurs des automobiles (dénommées par la suite pressions théoriques), variables suivant les types d'enveloppes et suivant leurs positions (montage sur les roues avant ou arrière).

Une réalisation immédiate pourrait consister en l'adoption d'un système de visualisation classique, la pression réelle étant indiquée par une aiguille mise en rotation par le système d'amplification et se déplaçant devant un cadran fixe gradué par exemple en bars. La pression théorique serait affichée grâce à un index, fixé sur la glace du manomètre, et susceptible d'être déplacé en rotation suivant un montage classique. L'écart entre la pression réelle et la pression théorique se visualiserait ainsi par l'écart existant entre ces deux aiguilles.

Or le problème se complique par le fait que le manomètre, faisant partie intégrante de la roue, occupera à chaque arrêt une position aléatoire par rapport à l'observateur, les aiguilles étant éventuellement dirigées vers le bas. D'où une interversion possible à distance entre l'aiguille indiquant la pression théorique et celle correspondant à la pression réelle, ainsi qu'une difficulté pour lire les chiffres à l'envers.

Pour éviter cet inconvénient et simplifier la lecture à distance, il faudrait pouvoir affecter à chaque roue un manomètre possédant un index mobile constitué par deux secteurs colorés, l'un en rouge par exemple pour indiquer les zones de pression proscrites, l'autre en vert par exemple pour visualiser les zones de pression autorisées, la frontière entre ces deux zones matérialisant clairement l'index précédent qui disparaît ainsi, ces plages colorées devant être alors supportées par une surface.

Une solution simple consiste à imprimer ces plages colorées sur le disque transparent fermant la face avant du manomètre qui affectera la forme d'un cylindre, d'une hauteur d'au moins 5 millimètres, cette proéminence donnant une prise à l'utilisateur pour en permettre la rotation.

Quant au cadran gradué, il sera transféré sur un autre ensemble, présenté à l'utilisateur sous la forme d'un porte-clefs décrit plus loin.

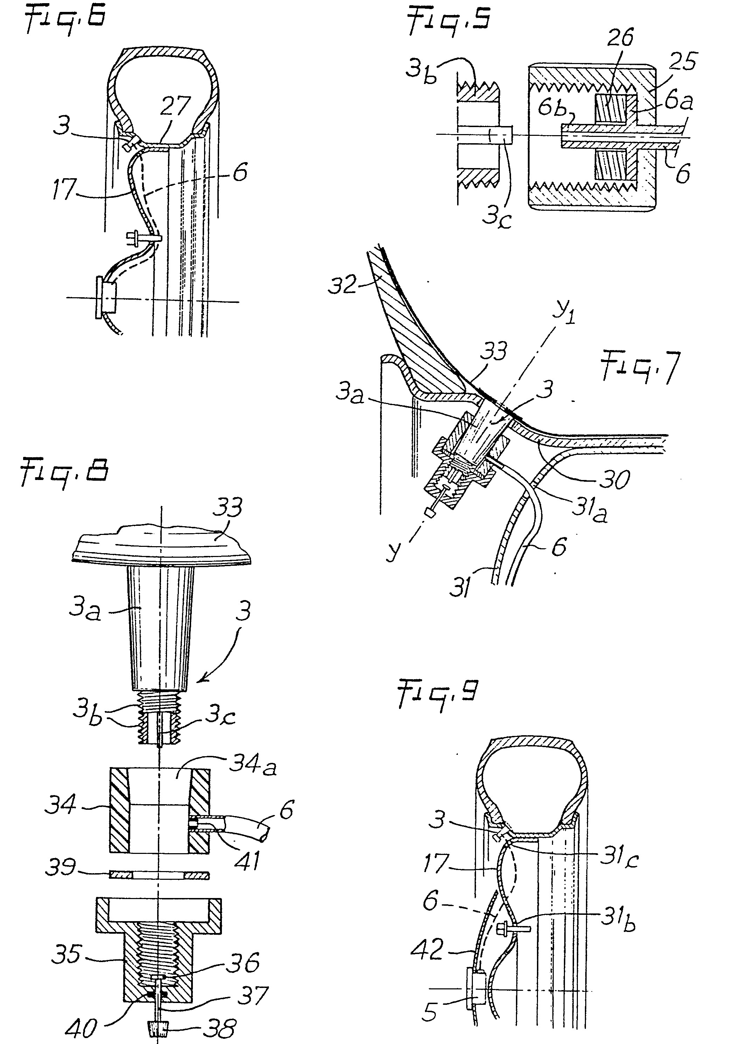

La figure 2 représente ainsi une vue de face d'un mode de réalisation préférentiel d'un manomètre permettant de comparer immédiatement la valeur de la pression réelle à la pression théorique.

Dans ce mode de réalisation, on retrouve le manomètre 5.

La face avant du manomètre est un disque transparent 7 qui est prolongé par un rebord cylindrique 7a. Ce disque et le rebord sont montés pivotants autour de l'axe du manomètre. Le rebord 7a permet de saisir le disque pour le faire pivoter afin de régler la position angulaire du disque et des secteurs colorés. La face interne du disque porte, sur sa périphérie, trois secteurs colorés juxtaposés 8, 9 et 10. Les secteurs colorés sont localisés à la périphérie du disque de telle façon que l'on voit l'aiguille 11 à travers la zone centrale du disque transparent.

Le secteur central 8, de couleur orange, couvre par exemple une plage correspondant à 0,3 bar, plage normale d'utilisation. Le secteur 9, situé à gauche du secteur 8 indique une pression inférieure à la pression théorique. Il couvre par exemple une plage de 1 bar. Il est coloré en rouge pour indiquer au conducteur de ne pas continuer à rouler à cette pression et qu'il faut regonfler le pneumatique.

Le secteur 10 situé à droite, indique une pression supérieure à la pression théorique. Il couvre par exemple une plage de 0,6 bar, correspondant aux surpressions généralement autorisées et même recommandées lorsque le véhicule est surchargé et doit rouler longuement à vitesse élevée, cette situation se rencontrant sur les autoroutes.

Le secteur 10 est par exemple coloré en vert.

Afin de permettre aux daltoniens d'utiliser le système, on pourra imprimer sur la zone rouge le symbole routier international STOP et faire figurer sur le secteur vert le sigle des autoroutes.

Afin d'augmenter la précision de la lecture, le manomètre comportera une plage de lecture dont l'amplitude correspondra à la variation de pression allant de 1,2 bar à 3,1 bar. Un examen des catalogues des constructeurs d'enveloppes montre en effet que la pression minimale d'utilisation, sur l'ensemble des pneus fabriqués, est de 1,5 bar. Donc, la plage de 0 à 1,5 bar ne présentera aucun intérêt pour l'utilisateur. Toutefois, il faudra laisser à l'automobiliste la possibilité d'apprécier la chute de pression, avec une amplitude permettant de visualiser une diminution de pression de 0,3 bar, correspondant à la plage orange précédemment envisagée. Ainsi, le minimum de pression indiquée par l'appareil sera de 1,2 bar.

A l'inverse, on rencontre des enveloppes devant être gonflées à 2,5 bar. Si l'on majore cette pression de 0,3 bar de surpression nécessaire en cas de surcharge du véhicule, on aboutit à une pression de 2,8 bar à laquelle il faut ajouter une pression supplémentaire de 0,3 bar due à l'échauffement du pneu au cours de son utilisation. On aboutit ainsi à une pression maximale de 3,1 bar pour une enveloppe de tourisme.

Ce manomètre comportera ainsi une butée minimale à 1,2 bar et une butée maximale à 3,1 bar.

On voit, sur la figure 3, la coupe du disque 7 et du rebord cylindrique 7a, réalisés en polycarbonate moulé, matière plastique transparente résistant parfaitement aux chocs. Sur sa face interne sont imprimés les secteurs colorés 8, 9 et 10.

Le rebord 7a vient s'insérer à forcement dans le boîtier métallique 20, le bossage circulaire situé à l'extrémité du rebord 7a venant se loger dans une gorge ménagée dans le boîtier métallique 20.

Ce mode de fixation simple permet d'assurer la rotation du cylindre 7 par rapport au boîtier 20, tout en assurant l'étanchéité à l'eau et aux poussières entre ces deux pièces.

L'utilisation d'une roue équipée d'un manomètre selon les figures 1 à 3 est la suivante.

Lorsque la roue est équipée d'un pneumatique, on connaît la pression théorique de gonflage et on met le pneu à cette pression, l'aiguille 11 prenant une position d'équilibre correspondant à cette pression. Ensuite l'utilisateur déplace le disque pour amener la frontière entre le secteur 9 et le secteur 10 à l'extrémité de l'aiguille 11.

Par ailleurs, le fait de pouvoir ajuster la frontière entre les plages 9 et 10 en accord avec la pression théorique (confondue lors de la remise en pression avec la pression réelle), permet de mettre rigoureusement en concordance les index des manomètres des deux roues avant par exemple, pour peu que l'on ait pris la précaution de relier les deux pneus avant au même poste de gonflage.

Dès lors, et quelle que soit la fidélité des manomètres, il devient possible, dans une plage de pression de faible amplitude, d'observer si l'un des deux pneus d'un même train subit une chute de pression dans le temps plus accentuée que l'autre car si le maintien de la pression d'un pneu au voisinage de la pression théorique est important, l'équipression entre les pneus d'un même train est tout aussi primordiale, ce résultat remarquable étant obtenu même si les deux manomètres n'ont pas une courbe de réponse identique.

Ainsi, le conducteur du véhicule voit très rapidement, sans avoir à effectuer aucune manoeuvre, si l'aiguille 11 se situe dans le secteur de surpression 10, auquel cas la pression est correcte ou si, au contraire, l'aiguille 11 se situe dans le secteur 9, zone où il faut envisager une remise en pression ou même à gauche de celui-ci, auquel cas il devient impératif de regonfler immédiatement le pneu.

La figure 3 est une coupe axiale de la partie centrale d'une roue selon l'invention équipée d'un manomètre 5. On a représenté sur cette figure l'extrémité 16 d'une fusée de roue, l'axe x xl et le voile 17 de la roue qui est percé d'un orifice central 18. Le manomètre 5 est logé dans l'orifice 18.

On a représenté sur la figure 3 le boîtier cylindrique 20 du manomètre qui est fixé coaxialement sur le voile 17. Le boîtier 20 se présente sous la forme de deux cylindres coaxiaux, emboîtés l'un dans l'autre, le plus petit des deux cylindres étant fixé à la face arrière et enveloppant l'extrémité de la fusée 16. Cette disposition en creux permet de réduire le dépassement du manomètre par rapport au centre du voile de la roue.

Le manomètre représenté comporte un tube manométrique métallique en spirale 21 ou tube de Bourdon, connecté à la valve 3 par une canalisation 6 et logé entre les deux cylindres du boîtier. Les déplacements de l'extrémité du tube manométrique sont transformés en mouvement de rotation autour de l'axe par un dispositif de transmission et d'amplification du mouvement 22 qui fait tourner l'axe 22a portant l'aiguille 11, laquelle se déplace devant un cadran 13 dépourvu d'indications chiffrées.

Concernant la fixation de ce manomètre sur la roue, plusieurs dispositions sont possibles.

Suivant la figure 4, il sera possible de couvrir la totalité du voile de la jante 17 au moyen d'un enjoliveur plein 23, allant en cela dans le sens des véhicules expérimentaux récents dont les aspérités des roues disparaissent grâce à des enjoliveurs de grand diamètre, le manomètre 5 et sa conduite d'impulsion 6 étant fixés sur cet accessoire. Dans cette configuration, la conduite d'impulsion est encore à l'abri des divers chocs et arrachements susceptibles de se produire en mouvement puisqu'elle cheminera entre le voile de jante 17 et l'enjoliveur 23, le voile 17 étant fixé au véhicule grâce aux vis de fixation 24.

Dans ce cas, selon la figure 5, l'extrémité de cette liaison pourra se terminer par un bouchon de valve 25, venant se visser sur l'extrémité en laiton de la valve, en comprimant un joint d'étanchéité 26 entre l'extrémité de la valve et un embout 6a auquel sera fixée la conduite de liaison 6. Cet embout 6a possédera un poussoir 6b venant ouvrir le clapet de valve 3c, mettant ainsi en communication la chambre à air et le manomètre.

Si par contre l'utilisateur veut garder à la jante son esthétique, il faudra fixer le manomètre sur la jante elle-même.

Suivant la figure 6, la conduite de liaison 6 cheminera à l'intérieur du voile de roue 17, étant ainsi à l'abri des chocs et arrachements éventuels. Au voisinage de la valve 3, un orifice dans le voile de jante 17 permettra à la conduite 6 de le traverser pour venir se raccorder à la base de la valve 3, bénéficiant ainsi de la protection offerte par le raccordement du voile 17 à la jante 27. D'où les dispositions particulières concernant le raccordement de la conduite 6 à la valve 3 suivant la figure 7 et sa vue éclatée suivant la figure 8.

On a représenté sur la figure 7 une partie d'une jante de roue 30 et une partie du voile de roue 31, au centre duquel est fixé un manomètre non représenté.

La jante 30 reçoit un pneu tubeless 32 ou un pneu avec chambre 33 équipé d'une valve 3 d'axe y yl, qui passe à travers un orifice de la jante. Dans cet exemple, la canalisation 6 est logée à l'arrière du voile 31 pour être protégée des chocs et elle passe à travers un perçage 31a du voile qui est situé derrière la valve 3. La valve 3 comporte habituellement une embase conique 3a revêtue de caoutchouc et un embout fileté mâle 3b muni d'une tige centrale 3c qui permet d'ouvrir le clapet de valve.

La canalisation 6 est équipée à son extrémité d'une bague en laiton 34 comportant une portée interne conique 34a, de même conicité que l'embase conique 3a. La canalisation 6 est connectée perpendiculairement à l'axe de la bague 34, à mi-hauteur de celle-ci.

La fixation comporte, en outre, un capuchon fileté 35 qui se visse sur l'extrémité filetée 3b de la valve. Un joint d'étanchéité 39 est placé entre la bague 34 et le capuchon 35. Le vissage du capuchon 35 sur l'embout fileté 3b assure l'écrasement du joint 39 et il appuie, de façon étanche, la portée conique 34a contre l'embase conique 3a de la valve.

Le capuchon 35 porte un poussoir 36 qui vient en butée contre la tige 3c d'ouverture du clapet de valve. Le poussoir 36 peut faire partie intégrante du capuchon 35. En variante, représentée sur les figures 7 et 8, le poussoir 36 est manœuvré par un tige 37 munie d'un bouton extérieur 38. Un joint 40 assure l'étanchéité entre la tige 37 et le capuchon 35.

Pour mettre en place cette fixation, on engage la bague 34 sur l'embase conique 3a de la valve. On visse ensuite le capuchon 35 sur l'embout fileté 3b de la valve et on ouvre la valve. Ultérieurement, lorsqu'on doit regonfler le pneu, il suffit de dévisser le capuchon 35 pour dégager l'embout fileté 3b en laissant en place la bague 34 autour de la valve. Cette solution permet de placer la canalisation 6 derrière le voile de jante et de loger l'extrémité de celle-ci dans la gorge constituée par la jonction entre la jante 30 et le voile 31, ce qui confère une bonne protection contre les chocs et les arrachements.

Une autre variante consiste à prévoir un poussoir fileté au pas des valves, vissé dans le capuchon 35, et permettant à ce poussoir d'être réglable par rapport à ce capuchon 35. Il devient alors possible, suivant la position relative de l'extrémité de la tige 3c par rapport à l'extrémité filetée 3b, d'obtenir l'ouverture du clapet de la valve même si par construction l'extrémité de la tige 3c est très en retrait de l'extrémité filetée.

L'extrémité de la canalisation 6 comporte, de préférence, un ajutage calibré 41 de faible diamètre, qui ne gênera pas la transmission de la pression statique mais qui limite les oscillations de la pression pendant les déplacements du véhicule. En cas de destruction du manomètre ou de la conduite 6, grâce à cet ajutage calibré, le pneu se dégonfle lentement, comme à la suite d'une crevaison.

Suivant la figure 9, une variante aux deux montages précédents consiste à fixer le manomètre 5 sur un enjoliveur de moyeu 42, le cheminement de la conduite de liaison 6 s'effectuant pour moitié entre l'enjoliveur du moyeu 42 et le voile de roue 17, et pour l'autre moitié du parcours derrière le voile de roue 17, grâce aux perçages de voile 31b et 31c.

Le raccordement de l'extrémité de la conduite de liaison 6 à la valve 3 s'effectue toujours suivant le montage décrit aux figures 7 et 8. Ce montage implique la fixation permanente de l'enjoliveur de moyeu 42 au voile de roue 17.

Une autre variante, possible dans le cas d'une utilisation de pneu sans chambre, consiste à fixer la prise d'impulsion directement sur la jante 10.

Comme explicité ci-dessus, le manomètre qui vient d'être décrit ne comporte aucune échelle graduée chiffrée afin de faciliter la lecture en toutes positions et de permettre une adaptation aisée à tous les types de pneus.

Toutefois, afin de donner au conducteur la possibilité de connaître la valeur chiffrée de la pression, on peut lui fournir une échelle de lecture. Afin que ce dernier puisse l'avoir constamment par-devers lui, elle lui sera présentée sous la forme d'un porte-clefs auquel seront fixées celles du véhicule. Cette échelle aura la forme d'une abaque circulaire comportant, sur chacune de ses deux faces, une échelle mobile correspondant l'une aux manomètres des roues avant, l'autre aux manomètres des roues arrière dont les pressions sont souvent distinctes. Chacune de ses faces comportera une échelle graduée périphérique allant de 1, 2 à 3 bar, de sorte qu'elle englobera toutes les pressions usuelles.

Chaque face comportera, en outre, un disque mobile en rotation portant des secteurs colorés de même ouverture angulaire que les secteurs colorés 8, 9 et 10. Ainsi, il sera possible de placer les secteurs colorés une fois pour toutes en face des divisions de l'échelle graduée, de telle sorte que la séparation entre les secteurs 9 et 10 soit en face de la graduation qui indique la pression théorique.

Chaque face comportera aussi une aiguille mobile en rotation autour de l'axe, que le conducteur du véhicule viendra placer dans la même position relative par rapport aux secteurs colorés que celle qu'il observera sur le manomètre et le conducteur lira alors la valeur numérique de la pression sur la graduation qui se trouvera en face de l'aiguille.

On sait, de plus, que la pression dans un pneu varie avec sa température, la pression à chaud après un parcours à grande vitesse pouvant être majorée de 0,2 à 0,3 bar par suite de l'échauffement qu'il subit alors. Afin d'éviter les erreurs de lecture dues à une vérification à chaud, le porte-clefs pourra avantageusement être muni d'un thermomètre qui, appliqué contre la bande de roulement du pneu, indiquera la température. Une échelle mobile de correction des températures sera alors prévue sur chaque échelle de lecture, permettant de corriger la pression lue pour la ramener à la valeur à froid, l'utilisateur ayant affiché, grâce au dispositif, la température du pneu au moment de la précédente mise en pression.

Par ailleurs, ce porte-clefs manomètre, manipulé par le conducteur chaque fois qu'il utilisera le véhicule, lui rappellera la présence des manomètres sur ses roues, l'incitant à vérifier ainsi plus fréquemment la pression de ses pneus.

Concernant le vol éventuel de ces roues manométriques, on remarquera que les manomètres seront fixés par l'intérieur des jantes, impliquant le démontage des roues pour pouvoir les extraire. Dès lors, l'utilisation d'écrous spéciaux antivol, déjà existant dans le commerce, permettra d'éviter simultanément le vol des roues et des manomètres.

Quant au vol des enjoliveurs manométriques, les mêmes dispositions pourront être prises, à condition d'utiliser des enjoliveurs tenant aux roues grâce aux écrous de fixation.

En résumé, il sera possible d'utiliser l'ensemble manomètre porte-clefs de trois manières différentes:

— en se contentant d'observer facilement à distance l'image des pressions laquelle, en zone rouge, devrait inciter l'utilisateur à regonfler ses pneus sans tarder;

— en traduisant en chiffres l'image des pressions dans les cas limites (sous-gonflages ou surgonflages), permettant à l'automobiliste consciencieux d'apprécier l'état des pressions d'une manière plus précise;

— en effectuant les corrections de température, si nécessaire.

Selon l'invention, incorporer coaxialement aux roues des manomètres présente pour ces organes de mesure, les avantages suivants:

— suppression de la contrainte poids permettant l'implantation de manomètres à la fois robustes et comportant des capteurs métalliques engendrant des appareils étanches et fidèles;

— suppression de la contrainte encombrement, permettant d'utiliser des manomètres de grand diamètre impliquant une bonne précision des mesures;

— fiabilité grâce à l'adoption de dispositifs manométriques d'un type très répandu dans l'industrie;

— avec pour conséquence un prix de revient très raisonnable puisque la fourniture se résumerait essentiellement dans celle du manomètre à membrane métallique, proche de ceux que l'on rencontre à un grand nombre d'exemplaires dans l'industrie;

— lecture et interprétation aisées des indications fournies par les manomètres compte tenu de leurs grandes dimensions;

— possibilité pour les automobilistes consciencieux d'effectuer des corrections pressions-température;

— diminution de l'effet des forces d'inertie centrifuges sur les mécanismes des manomètres, le rayon de giration étant faible;

— positionnement en surélévation des manomètres par rapport aux bordures des trottoirs.

**Revendications**

1. Roue de véhicule notamment d'une automobile, équipée d'un pneumatique gonflable, muni d'une valve (3) et d'un manomètre (5) qui est disposé au centre de la roue, coaxialement à celle-ci et qui est relié à la valve du pneumatique par une canalisation pneumatique (6) de petit diamètre, caractérisée en ce que ledit manomètre comporte, à sa périphérie, plusieurs secteurs colorés, juxtaposés (8, 9, 10) dont l'un correspond à la plage de pression normale de gonflage dudit pneumatique.

2. Roue de véhicule selon la revendication 1 dans laquelle ledit manomètre comporte un boîtier (20) qui est muni sur sa face avant d'un disque transparent (7), caractérisée en ce que ledit disque porte, à sa périphérie, lesdits secteurs colorés juxtaposés (8, 9, 10) et la position angulaire dudit disque et desdits secteurs colorés est réglable.

3. Roue de véhicule selon la revendication 2, caractérisée en ce que ledit boîtier (20) comporte deux cylindres qui sont emboîtés coaxialement l'un dans l'autre, et ledit disque transparent (7) est emboîté sur le plus grand des deux cylindres tandis que le plus petit des deux cylindres est fixé à la face arrière et enveloppe l'extrémité de la fusée de roue (16) et ledit manomètre comporte un tube de Bourdon (21) qui est logé entre les deux cylindres du boîtier.

4. Roue selon l'une quelconque des revendications 1 à 3, caractérisée en ce que ledit manomètre (5) est incorporé au centre d'un enjoliveur (23) qui recouvre entièrement le voile de la roue et la canalisation (6) qui relie ledit manomètre à la valve (3) est fixée à l'arrière dudit enjoliveur.

5. Roue selon la revendication 4, caractérisée en ce que ladite canalisation de liaison (6) est connectée sur ladite valve au moyen d'un capuchon fileté (25) qui se visse sur l'embout mâle (3b) de ladite valve et l'extrémité de la canalisation (6) porte une collerette (6a) qui est logée au fond dudit capuchon qui contient également un joint d'étanchéité (26).

6. Roue selon l'une quelconque des revendications 1 à 3, caractérisée en ce que ladite canalisation de liaison (6) est placée à l'arrière du voile de roue (31) qu'elle traverse à travers un orifice (31a) situé derrière la valve (3) et elle comporte, à son extrémité, une bague (34) sur laquelle elle est raccordée radialement, laquelle bague comporte une portée conique (34a) qui coopère avec l'embase conique (3a) de ladite valve sur laquelle ladite bague est engagée et est maintenue appliquée de façon étanche par un capuchon (35) qui est vissé sur l'embout fileté (3b) de ladite valve.

7. Roue selon l'une quelconque des revendications 1 à 6, caractérisée en ce que ladite canalisation de liaison pneumatique (6) comporte un orifice calibré (41).

8. Enjoliveur (23) de roue de voiture du type qui recouvre la totalité du voile de roue (17) et qui se fixe sur la jante de roue, caractérisé en ce qu'il comporte un manomètre (3) incorporé au centre dudit enjoliveur et une canalisation de liaison (6) qui part dudit manomètre, qui est fixé à la face arrière dudit enjoliveur et qui comporte, à son extrémité libre, un capuchon fileté (25) qui se visse sur la valve (3).

## Claims

1. Wheel of a vehicle, in particular of a motor vehicle, equipped with an inflatable pneumatic tire, provided with a valve (3) and with a pressure gauge (5) placed in the center of the wheel coaxially thereto, and is operationally coupled to the pneumatic tire valve via a pneumatic tube (6) of small diameter, characterized in that said pressure gauge comprises, on its periphery, a plurality of coloured and juxtaposed sectors (8, 9, 10), one of which corresponds to the normal range of the inflating pressure of said pneumatic tire.

2. Vehicle wheel according to claim 1, characterized in that said pressure gauge comprises a casing (20) provided on its front face with a transparent disc (7), characterized in that said disc carries on its periphery said juxtaposed coloured sectors (8, 9, 10) and the angular position of said disc and said coloured sectors can be adjusted.

3. Vehicle wheel according to claim 2, characterized in that said casing (20) comprises two cylinders which are coaxially nested one into the other, said transparent disc (7) being nested into the bigger of the two cylinders whereas the smaller of said two cylinders is fastened to the rear face and covers the end of the wheel steering stub axle (16), said pressure gauge comprises a Bourdon tube (21) housed between the two casing cylinders.

4. Wheel according to any one of claims 1 to 3, characterized in that said pressure gauge (5) is incorporated in the center of an ornamental hub cap (23) which entirely covers the wheel body, and the tube (6) connecting said pressure gauge to the valve (3) is fastened to the rear part of said ornamental hub cap.

5. Wheel according to claim 4, characterized in that the connecting tube (6) is operationally coupled to said valve by means of a threaded cap (25) screwed on the male end (3b) of said valve, and the end of the tube (6) carries a flange (6a) housed in the bottom of said cap which also contains a sealing ring (26).

6. Wheel according to any one of claims 1 to 3, characterized in that the connecting tube (6) is placed in the rear part of the wheel body (31) which it crosses through an orifice (31a) situated behind the valve (3), said tube comprising at its end a ring (34) to which it is radially connected, said ring comprising a conical bearing (34a) which cooperates with the conical base (3a) of said valve on which said ring is engaged and against which said ring is held in tight manner via a cap (35) which is screwed on the threaded end (3b) of said valve.

7. Wheel according to any one of claims 1 to 6, characterized in that said pneumatic connecting ring (6) comprises a calibrated orifice (41).

8. Ornamental hub cap (23) of motor vehicle wheel of the type covering the whole wheel body (17) and which is secured to the wheel rim, characterized in that it comprises a pressure gauge (3) incorporated in the center of said ornamental hub cap, and a connecting tube (6) starting from said pressure gauge, and is secured to the rear face of said ornamental hub cap, said connecting tube comprising, at its free end, a threaded cap (25) which screws onto the valve (3).

## Patentansprüche

1. Rad für ein Fahrzeug, insbesondere ein Automobil, das mit einem aufblasbaren Luftreifen ausgestattet ist, welcher mit einem Ventil (3) und einem im Mittelteil des Rades koaxial zu diesem angeordneten Manometer (5) versehen ist, das durch eine Luftleitung (6) von geringem Durchmesser mit dem Ventil des Luftreifens verbunden ist, dadurch gekennzeichnet, dass das Manometer an seinem Umfang mehrere färbige nebeneinanderliegende Sektoren (8, 9, 10) aufweist, von denen einer dem Normaldruckbereich des aufgeblasenen Luftreifens entspricht.

2. Fahrzeugrad nach Anspruch 1, bei welchem das Manometer ein Gehäuse (20) umfasst, welches an seiner Vorderseite mit einer transparenten Scheibe (7) versehen ist, dadurch gekennzeichnet, dass die Scheibe an ihrem Umfang die färbigen, nebeneinanderliegenden Sektoren (8, 9, 10) trägt und die Winkelposition der Scheibe und der färbigen Sektoren einstellbar ist.

3. Fahrzeugrad nach Anspruch 2, dadurch gekennzeichnet, dass das Gehäuse (20) zwei koaxial ineinander gesteckte Zylinder umfasst und die transparente Scheibe (7) auf dem grösseren der beiden Zylinder aufgesteckt ist, wogegen der kleinere der beiden Zylinder an der Rückseite befestigt ist und das Ende der Radspindel (16) umhüllt, und das Manometer eine zwischen den beiden Zylindern des Gehäuses befindliche Bourdonsche Röhre umfasst.

4. Rad nach einem der Ansprüche 1 bis 3, dadurch gekennzeichnet, dass das Manometer (5) in der Mitte einer Zierkappe (23) eingebaut ist, welche den Radkörper vollkommen bedeckt, und die das Manometer mit dem Ventil (3) verbindende Leitung (6) an der Rückseite der Zierkappe befestigt ist.

5. Rad nach Anspruch 4, dadurch gekennzeichnet, dass die Verbindungsleitung (6) mittels einer Gewindekappe (25), die auf die Einsteckmuffe (3b) des Ventils aufsteckbar ist, am Ventil angeschlossen ist und das Ende der Leitung (6) einen Bund (6a) trägt, der sich am Boden der Gewindekappe befindet, die auch eine Dichtung (26) enthält.

6. Rad nach einem der Ansprüche 1 bis 3, dadurch gekennzeichnet, dass die Verbindungsleitung (6) hinter dem Radkörper (31), den sie durch eine hinter dem Ventil (3) befindliche Öffnung (31a) durchsetzt, angeordnet ist und an ihrem Ende einen Ring (34) trägt, an dem sie radial angeschlossen ist, welcher Ring einen konischen Sitz (34a) aufweist, der mit der konischen Steckverbindung (3a) des Ventils, auf der der Ring aufgesteckt ist, zusammenwirkt und mittels einer Kappe (35), die auf der mit Gewinde versehenen Muffe (3b) aufgeschraubt ist, auf dichtende Weise in Anlage gehalten ist.

7. Rad nach einem der Ansprüche 1 bis 6, dadurch gekennzeichnet, dass die Verbindungsluftleitung (6) eine kalibrierte Öffnung (41) aufweist.

8. Zierkappe (23) für ein Wagenrad, die den gesamten Radkörper (17) bedeckt und an der Radfelge befestigt ist, dadurch gekennzeichnet, dass sie ein in der Mitte der Zierkappe eingebautes Manometer (3) und eine vom Manometer wegführende Verbindungsleitung (6) umfasst, die an der Rückseite der Zierkappe befestigt ist und an ihrem freien Ende eine auf das Ventil (3) aufschraubbare Gewindekappe (25) aufweist.

Fig.1

Fig.2

Fig.3

Fig.4

Fig.6

Fig.5

Fig.7

Fig.8

Fig.9